# EUROPÄISCHE PATENTANMELDUNG

(11) **EP 1 847 744 A2**
(43) Veröffentlichungstag der Anmeldung: **24.10.2007**
(21) Anmeldenummer: 07008093.2
(22) Anmeldetag: 20.04.2007
(51) Int. Cl.: F16L 1/028, F16L 55/128, F16L 55/136

(54) **Vorrichtung zum Abdichten eines Rohrs**

(30) Priorität: 20.04.2006 DE 202006006501 U
(71) Anmelder: Tracto-Technik GmbH & Co.KG, 57368 Lennestadt (DE)
(72) Erfinder: Koch, Dipl.-Ing. Elmar, 59889 Eslohe (DE); Wurm, Dipl.-Ing. Dieter, 57399 Kirchhundem (DE)
(74) Vertreter: König, Gregor Sebastian

(57) **Zusammenfassung**

Die Erfindung betrifft eine Vorrichtung (1) zum Abdichten eines Rohrs mit einem Trägerelement (10) sowie mindestens einem Dichtelement (12,13), das lösbar mit dem Trägerelement verbunden ist, wobei das Dichtelement zumindest einen Randbereich aus einem elastischen Werkstoff aufweist und die Abmessungen des Dichtelements so gewählt sind, daß eine Dichtwirkung durch eine elastische Deformation des Randbereichs des Dichtelements erfolgt.

## Beschreibung

Die Erfindung betrifft eine Vorrichtung zum Abdichten eines Rohrs sowie ein System aus einer Klemmvorrichtung zur Fixierung an einem Rohr und einer entsprechenden Dichtvorrichtung.

Ein solches System ist beispielsweise aus der DE 10 2005 045 050.4 bekannt. Derartige Systeme werden beim Neuverlegen oder Sanieren von im Erdreich verlegten Rohrleitungen verwendet und dienen dazu, die Zugkräfte, die z. B. von einer außerhalb der Erdbohrung auf der Erdoberfläche oder in einer Arbeitsgrube positionierten Zugvorrichtung aufgebracht und über ein Zugseil oder -gestänge übertragen werden, auf das Rohr zu übertragen.

Das aus der DE 10 2005 045 050.4 bekannte System weist eine Klemmvorrichtung auf, bei der sich ein konischer Adapterkopf in längsaxialer Richtung an dem Rohr abstützt und eine zentrale Öffnung aufweist, in der ein Zugstab längsaxial beweglich geführt ist. An dem Zugstab ist ein konisches Aufweitelement angeordnet, das durch eine Relativbewegung der Zugstange gegen kreisförmig um die Zugstange angeordnete Klemmelemente gezogen wird, wodurch die Klemmelemente, die rückseitig, d.h. in das Rohr ragend, an dem Adapterelement angeschlagen sind, radial ausgelenkt werden und gegen die Innenwand des Rohrs drücken. Dadurch wird eine Übertragung der Zugkräfte von dem Klemmelement auf das Rohr ermöglicht.

Die Zugstange bei dem aus der DE 10 2005 045 050.4 bekannten System ist als Teleskopstange ausgebildet, wobei das Aufweitelement an dem Außenrohr befestigt ist, während die Innenstange rückseitig mit einer Dichtvorrichtung verbunden ist. Die Dichtvorrichtung weist ein sich konisch vergrößerndes Endstück auf, auf dessen Mantelfläche ein Dichtring aufliegt. Die von der Zugvorrichtung aufgebrachte Zugkraft wirkt auf die Innenstange, so daß die Dichtvorrichtung zunächst gegen die Rückseite des Aufweitelements gedrückt wird, wodurch der Dichtungsring verformt und radial ausgedehnt wird. Erst danach bewirkt eine weitere Relativbewegung der Zugstange zu dem Adapterkopf ein Klemmen der Klemmvorrichtung in der oben beschriebenen Art und Weise.

Nachteilig bei dem aus der DE 10 2005 045 050.4 bekannten System ist dessen hoher konstruktiver Aufwand.

Der vorliegenden Erfindung liegt daher die Aufgabe zugrunde, ein verbessertes System bzw. eine verbesserte Dichtvorrichtung zum Abdichten eines Rohrs zu schaffen, das insbesondere konstruktiv einfach aufgebaut ist.

Diese Aufgabe wird durch eine Dichtvorrichtung gemäß Anspruch 1 und ein System aus einer Dichtvorrichtung sowie einer Klemmvorrichtung gemäß Anspruch 13 gelöst. Vorteilhafte Ausführungsformen sind Gegenstand der abhängigen Ansprüche.

Der Kern der Erfindung sieht vor, eine Dichtvorrichtung mit einem Trägerelement zu versehen, wobei mindestens ein Dichtelement (im folgenden immer mit "Dichtelement" benannt) lösbar mit dem Trägerelement verbunden ist. Die Dichtvorrichtung ist vorzugsweise zur Verbindung mit einer Klemmvorrichtung zur Fixierung `an einem Rohr vorgesehen. Das Dichtelement weist zumindest einen Randbereich auf, der aus einem elastischen Material besteht, wobei die Abmessungen des Dichtelements so gewählt sind, daß eine Dichtwirkung durch eine elastische Deformation des Randbereichs erfolgt.

Das Dichtelement kann mit einem gewissen Übermaß dimensioniert sein, so daß sich der Randbereich des Dichtelements beim Einschieben in das Rohr deformiert und so eine Dichtwirkung erzeugt. Die Größe des Übermaßes kann sich dabei anhand der gegeben Parameter, insbesondere der Materialien des Dichtelements sowie des Rohrs und des zu erwartenden Überdrucks auf einer Seite des Dichtelements bestimmen. Die Kontur des Umfangs korrespondiert vorzugsweise zu dem Innenquerschnitt des Rohrs.

Derartige Dichtelemente können konstruktiv sehr einfach ausgeführt sein. Da sie - je nach Ausführungsform - jedoch auf einen bestimmten Nenndurchmesser des Rohrs ausgelegt sein können oder gegebenenfalls nur einen geringen Bereich abdecken, sieht eine bevorzugte Dichtvorrichtung vor, daß das Dichtelement schnell und einfach von dem Trägerelement, das vorzugsweise direkt mit einer Klemmvorrichtung zur Fixierung an einem Rohr verbunden ist, gelöst und gegen ein entsprechendes Dichtelement mit anderen Dimensionen ausgetauscht werden können.

Das Dichtelement ist in einer bevorzugten Ausführungsform der Erfindung als Dichtscheibe ausgebildet, die besonders bevorzugt eine Zwischenscheibe aus einem elastischen Material und an zumindest einer Seite, vorzugsweise jedoch auf beiden Seiten, eine Stützscheibe aus einem steifen Material aufweist.

Unter elastischem Material für das Dichtelement wird erfindungsgemäß ein solches Material verstanden, das bei den bei der Verwendung der Vorrichtung auftretenden Kräften so weit deformiert wird, daß eine technisch wirkungsvolle Dichtwirkung erzielt wird.

Das erfindungsgemäß steife Material der Stützscheiben soll sich bei den auftretenden Kräften möglichst nur in einem geringen, die Funktion der Stützscheiben nicht beeinträchtigendem Maße deformieren.

Die Ausgestaltung der Dichtscheiben mit einer Zwischenschicht sowie einer, zwei oder mehreren Stützschichten sorgt dafür, daß sich die elastische Zwischenschicht - wie gewünscht - lediglich in ihrem Randbereich deformiert und ansonsten formstabil bleibt. Der elastische Randbereich sorgt zudem für einen gewissen Ausgleich im Falle einer Ovalität (Unrundheit) des Rohrs.

Wird die Dichtscheibe nur an einer Seite der Zwischenscheibe mit einer Stützscheibe versehen, so befindet sich diese vorzugsweise auf derjenigen Seite, die dem Überdruck, gegenüber dem die Dichtvorrichtung zur Abdichtung vorgesehen ist, gegenüberliegt.

Um eine einfache und sichere sowie möglichst dichte Befestigung des Dichtelements auf dem Trägerelement zu ermöglichen, weist das Dichtelement eine - vorzugsweise zentrale - Öffnung auf, die bevorzugt zu dem Querschnitt des Trägerelements korrespondiert.

Die Dichtheit der Verbindung zwischen dem Dichtelement und dem Trägerelement kann zudem durch eine zusätzlich vorgesehene Dichtung, beispielsweise einen in einer Nut des Trägerelements angeordneten O-Ring verbessert werden.

In einer bevorzugten Ausgestaltung der Erfindung ist das Trägerelement als Trägerstab, d.h. mit einer im Verhältnis zum Querschnitt großen Längserstreckung, die im montierten Zustand der Dichtvorrichtung zudem vorzugsweise in Längsrichtung des Rohrs angeordnet ist, ausgebildet. Die Kontur des Querschnitts des Trägerelements, insbesondere des Trägerstabs kann beliebig gewählt sein, wobei ein unrunder (z.B. ovaler, drei-, vier- oder mehreckiger, etc.) Querschnitt den Vorteil einer Verdrehsicherung des montierten Dichtelements aufweist, während ein runder Querschnitt die vorteilhafte Ausgestaltung ermöglicht, das Dichtelement mittels eines Gewindes mit dem Trägerelement zu verbinden. Als Trägerelement wird insbesondere auch ein Trägerstab mit einer auf dem Trägerstab angeordneten, das mindestens eine Dichtelement tragenden Trägerhülse verstanden. Insbesondere bevorzugt weist die Trägerhülse im Bezug auf den Trägerstab eine Spielpassung auf und kann relative zum Trägerstab verschoben werden.

Ist die Trägerhülse mit einer Spielpassung auf einem Trägerstab angeordnet, so erlaubt dies eine Relativbewegung des Trägerstabs zur Trägerhülse. Ist die erfindungsgemäße Vorrichtung zum Abdichten eines Rohres in das Rohr eingeführt worden und an der abzudichtenden Stelle plaziert worden, so kann die Trägerhülse bei entsprechendem Übermaß des Dichtelements durch die dadurch erzeugte Klemmwirkung über das verklemmte Dichtelement an dieser Stelle gehalten werden, während der Trägerstab weiterhin axial bewegt werden kann. Wäre das Dichtelement unmittelbar auf dem Trägerstab und mit dem Trägerstab fest verbunden angeordnet, würde die Axialbewegung des Trägerstabs zu einer Axialbewegung des dem Trägerstab nahen Bereichs des Dichtelements und damit zumindest zu einer Relativbewegung dieses dem Trägerstab nahen Bereichs zu dem an der Rohrinnenwand verklemmten Bereich des Dichtelements und möglicherweise zu einer Relativbewegung des Dichtelements zur Rohrinnenwand führen. Durch diese Bewegungen wird das Dichtelement zum einen geschwächt, zum anderen besteht die Gefahr von Undichtigkeiten.

Eine Spielpassung bietet zudem den Vorteil, daß bei einer möglicherweise vorgesehenen Schraubverbindung des Trägerstabs mit benachbarten Bauelementen beim Aufschrauben keine Reibungskräfte entstehen, die bei einer Rotationsbewegung eines fest auf dem Trägerstab vorgesehenen, mit seinen Außenbereichen an der Rohrinnenwand anliegenden Dichtelements entstehen würden.

Um einen festen Halt im montierten Zustand zu gewährleisten, weist das Trägerelement vorzugsweise einen Anschlag auf, an dem das Dichtelement im montierten Zustand anliegt. In einer Ausführungsform, bei der das Trägerelement als Trägerstab mit Trägerhülse ausgebildet ist, kann der Anschlag auf der Trägerhülse vorgesehen sein und somit den Halt des Dichtelements auf der Trägerhülse verbessern.

Eine vollständige Fixierung wird dann vorzugsweise dadurch erreicht, daß ein Halteelement vorgesehen ist, das, bezogen auf das Dichtelement, auf der gegenüberliegenden Seite des ersten Anschlags mit dem Trägerelement (beispielsweise der Trägerhülse) verbunden wird und einen zweiten Anschlag für das Dichtelement bildet. Das Verbinden des Halteelements mit dem Trägerelement (beispielsweise der Trägerhülse) kann beispielsweise über ein Gewinde oder eine beliebige (andere) kraft- oder formschlüssige Verbindung erfolgen.

In einer bevorzugten Ausführungsform der vorliegenden Erfindung, insbesondere bei erhöhten Anforderungen an die Dichtigkeit der Vorrichtung im Rohr, weist die Dichtvorrichtung zwei oder mehr Dichtelemente auf, die (im montierten Zustand der Dichtvorrichtung in Längsrichtung des Rohrs) hintereinander angeordnet sind. Vorzugsweise werden dabei jeweils zwei benachbarte Dichtelemente über ein Distanzstück in einem Abstand zueinander gehalten. Das Distanzstück kann steif ausgeführt sein, so daß der Abstand zwischen den Dichtelementen konstant bleibt; es kann jedoch auch elastisch ausgeführt sein, so daß sich der Abstand zwischen den Dichtelementen bei der Montage oder in Abhängigkeit von dem Überdruck auf die Dichtelemente verändert. Das Distanzstück kann insbesondere als Hülse ausgebildet sein, die auf das Trägerelement (beispielsweise die Trägerhülse) aufgeschoben wird.

Zwei oder mehr Dichtelemente bieten eine erhöhte Sicherheit, insbesondere bei Überlast durch Druckspitzen und verbessern zudem die (Selbst-)Zentrierung der Dichtvorrichtung in dem Rohr.

Zur Befestigung der erfindungsgemäßen Dichtvorrichtung mit einem externen Bauteil, insbesondere mit einer Klemmvorrichtung zur Fixierung an einem Rohr, wodurch ein erfindungsgemäßes System ausgebildet wird, weist die Dichtvorrichtung vorzugsweise ein Adapterelement auf. Dieses ist vorzugsweise an dem Trägerelement angeordnet, so daß die Verbindung zwischen der Klemmvorrichtung und der Dichtvorrichtung beim Auswechseln des/der Dichtelements/Dichtelemente zur Anpassung an den jeweiligen Rohrdurchmesser nicht gelöst werden muß.

Vorzugsweise weist das Adapterelement ein Gewinde und/oder eine (beliebige) Steckverbindung, z.B. einen Bajonettverschluß zur Übertragung der Kräfte auf.

Die Klemmvorrichtung des erfindungsgemäßen Systems mit einer Dichtvorrichtung weist vorzugsweise einen Adapterkopf auf, der sich in längsaxialer Richtung des Rohrs an diesem abstützt. Dadurch kann bereits eine erste Abdichtung des Rohrinnenraums erzielt werden.

Der Adapterkopf kann weiterhin eine, vorzugsweise zentrale Öffnung aufweisen, in der ein Zugelement in längsaxialer Richtung verschiebbar gelagert ist. Eine solche verschiebbare Lagerung des Zugelements in der Öffnung des Adapterkopfs kann erfindungsgemäß eine freie Verschiebbarkeit erlauben; eine solche kann jedoch beispielsweise auch über ein Gewinde erreicht werden, wobei die Längsverschiebung dann durch eine Relativrotation des Zugelements zu dem Adapterkopf erfolgt.

Vorzugsweise ist mit dem Zugelement ein Aufweitkörper verbunden, der besonders bevorzugt zumindest teilweise konisch ausgebildet ist.

Die Klemmvorrichtung kann weiterhin mindestens ein an dem Adapterkopf befestigtes Klemmelement aufweisen, das so ausgebildet und angeordnet ist, daß es entgegen einer Rückstellkraft durch eine Relativbewegung des Aufweitkörpers hierzu radial, d.h. in Richtung auf die Rohrinnenwand zu, ausgelenkt und dadurch radial gegen die Innenwand des Rohrs gedrückt wird. Besonders bevorzugt weist die Klemmvorrichtung mehrere Klemmelemente auf, die kreisförmig, vorzugsweise in einer gleichmäßigen Teilung um das Zugelement angeordnet sind, um eine möglichst gleichmäßige Belastung der Rohrinnenwand zu erreichen.

Die Rückstellkraft kann beispielsweise dadurch erreicht werden, daß das/die Klemmelement(e) durch den Aufweitkörper elastisch verformt werden. Gleichwohl besteht die Möglichkeit, die Rückstellkräfte durch separate Bauteile (Federn) zu erzielen.

Die Relativbewegung zwischen dem Aufweitkörper und dem/den Klemmelement(en) kann durch eine Zugkraft, die beispielsweise von einer Zugvorrichtung über ein Zugelement, wie eine Kette, ein Seil oder ein Gestänge auf das Zugelement übertragen wird, erreicht werden. Ist das Zugelement mittels eines Gewindes innerhalb des Adapterkopfs gelagert, kann die Relativbewegung durch eine Rotation des Zugelements erreicht werden.

Die Erfindung wird nachfolgend anhand von in den Zeichnungen dargestellten Ausführungsbeispielen näher erläutert.

In den Zeichnungen zeigen:
- Fig. 1: ein erfindungsgemäßes System im montierten Zustand;
- Fig. 2a/b: eine erfindungsgemäße Dichtvorrichtung und eine Stützscheibe mit Halteprofil;
- Fig. 3: eine Detailansicht des Trägerelements der Dichtvorrichtung der Fig. 2.

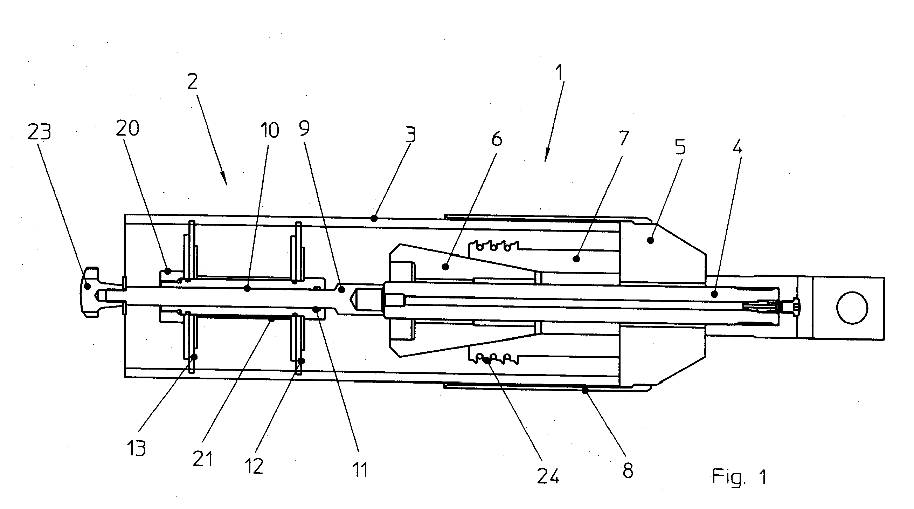

Fig.1 zeigt ein erfindungsgemäßes System, wie es bevorzugt zum Rohrabdichten im Niederdruckbereich, insbesondere bis 5 bar Überdruck eingesetzt wird und im wesentlichen aus einer Klemmvorrichtung 1 sowie einer erfindungsgemäßen Dichtvorrichtung 2 besteht. Das System ist an bzw. in einem Rohr 3 montiert, das mittels einer Zugvorrichtung (nicht dargestellt) in eine (ebenfalls nicht dargestellte) Erdbohrung eingezogen werden soll. Hierzu weist ein Zugstab 4 der Klemmvorrichtung an seinem (in der vorgesehenen Bewegungsrichtung des Rohrs) vorderen Ende eine Öse zur Befestigung mit einem Zuggestänge (nicht dargestellt) auf.

Der Zugstab 4 ist beweglich in einer Öffnung eines konisch ausgebildeten Adapterkopfs 5 gelagert und weist an seinem hinteren Ende einen ebenfalls konischen Aufweitkörper 6 auf, der mit seiner Mantelfläche in direktem Kontakt zu schräg ausgebildeten Flächen von insgesamt vier Klemmelementen 7 steht, die auf der Rückseite des Adapterkopfs 5 mit diesem verbunden sind.

Eine an dem Adapterkopf 5 verbundene Hülse 8 dient zur Zentrierung des Rohrs an dem Adapterkopf und erfüllt bereits eine Dichtfunktion, indem sie insbesondere groben Schmutz aus dem Rohrinnenvolumen fernhält.

Mit dem rückseitigen Ende des Zugstabs 4 ist eine erfindungsgemäße Dichtvorrichtung 2 mittels einer Verschraubung verbunden. Der Zugstab weist hierfür einen Gewindebolzen und ein Trägerstab 9 der Dichtvorrichtung ein korrespondierendes Innengewinde auf. Auf dem Trägerstab 9 ist eine Trägerhülse 10 mit einer Spielpassung angeordnet, wobei die Verbindung zwischen den beiden Bauteilen über einen O-Ring 11 zusätzlich abgedichtet ist.

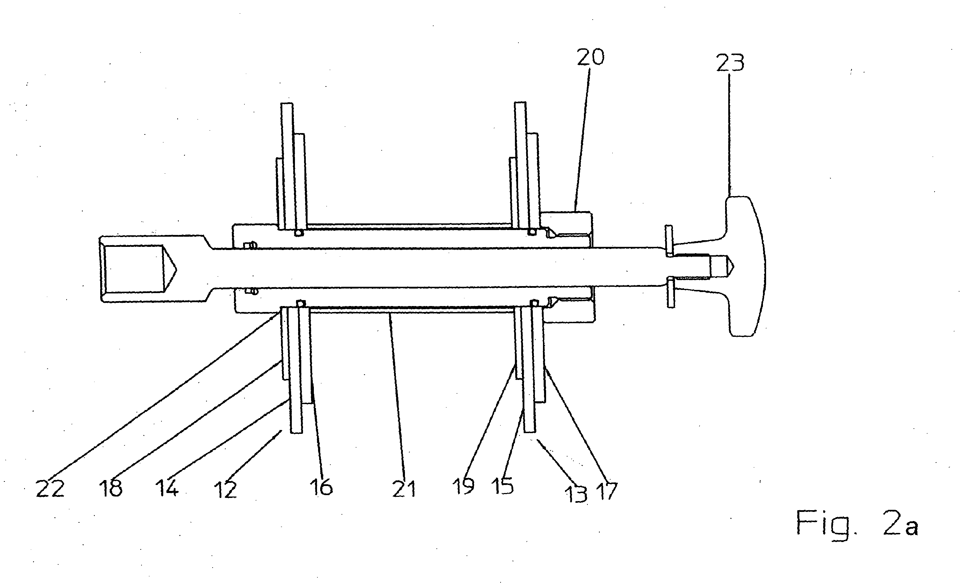

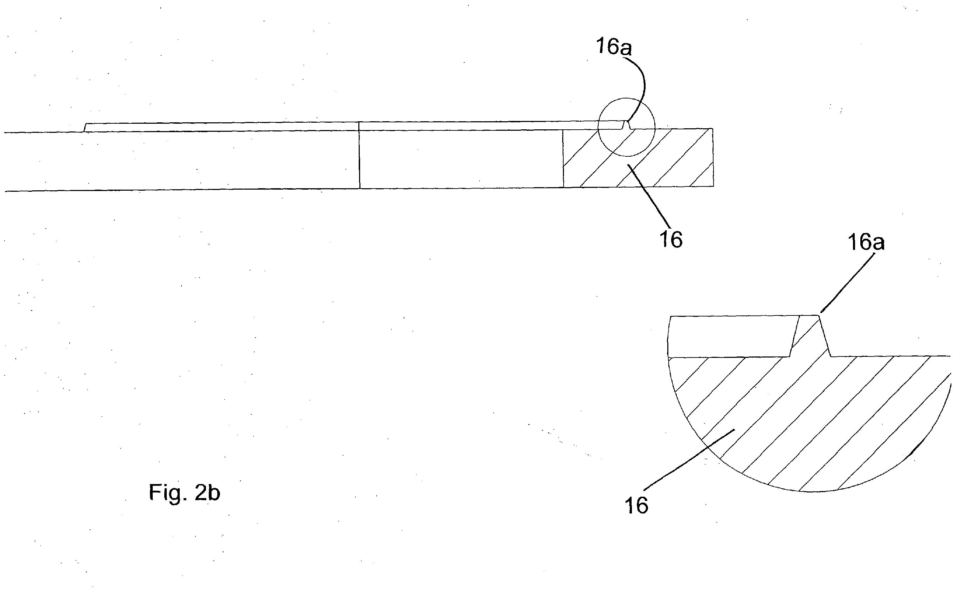

Auf der Trägerhülse 10 sind insgesamt zwei Dichtscheiben 12, 13 gelagert, die jeweils aus einer Zwischenscheibe 14, 15 aus einem elastischen Material sowie zwei Stützscheiben bestehen. Die Stützscheiben haben unterschiedlich große Durchmesser, wobei die Stützscheiben 16, 17 mit dem größeren Durchmesser jeweils auf der Rückseite der Zwischenscheiben 14, 15, auf der im Betrieb ein Unterdruck zu erwarten ist, angeordnet sind. Die im Durchmesser relativ großen Stützscheiben 16, 17 stellen sicher, daß durch den im Betrieb anliegenden Überdruck lediglich ein schmaler Randbereich der Dichtscheiben 12, 13 deformiert und somit eine sichere Dichtwirkung gewährleistet wird. Die im Durchmesser geringeren Stützscheiben 18, 19 stützen dagegen einen relativ breiten Randbereich der Zwischenscheiben 14, 15 nicht ab, so daß sich dieser beim Einschieben der Dichtvorrichtung in das Rohr (in der Fig. 1 von links nach rechts) relativ leicht deformieren kann, so daß der Einschiebebewegung lediglich relativ geringe Reibungskräfte entgegenstehen. Die Stützscheiben können, wie in Fig. 2b dargestellt, ein oder mehrere Halteprofile 16a, insbesondere in Form einer Klemmwulst aufweisen, damit die Dichtscheiben beim Einsetzen nicht aus ihrer Position herausrutschen.

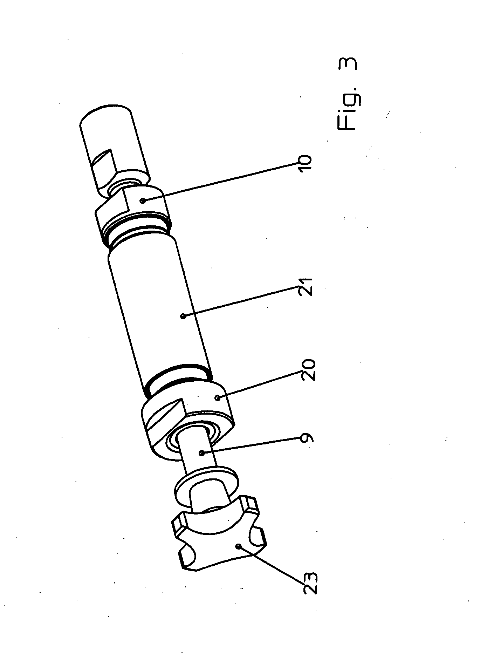

Die vordere Dichtscheibe 12 liegt auf einer Seite an einem Vorsprung 22 an, der ein axiales Verrutschen der Dichtscheiben 12, 13 in eine Richtung verhindert. Auf der Rückseite der hinteren Dichtscheibe 13 ist ein Halteelement 20 mittels eines Gewindes auf der Trägerhülse 10 befestigt, das als rückseitiger Anschlag ein axiales Verrutschen der Dichtscheiben 12, 13 in die andere Richtung verhindert. Schlüsselflächen an dem Halteelement 20 dienen zum Ansetzen eines Maulschlüssels zum Festziehen der Gewindeverbindung (vgl. Fig. 3).

Eine starre Distanzhülse 21 sorgt für einen konstanten Abstand der zwei Dichtscheiben 12, 13 zueinander.

Über eine Gewindeverbindung ist ein Drehgriff 23 an dem rückseitigen Ende des Trägerstabs 9 angeordnet. Damit kann die Dichtvorrichtung 2 ohne Zuhilfenahme eines Werkzeugs mit der Klemmvorrichtung verbunden werden.

Im Betrieb des Systems wird über die Zugvorrichtung eine Zugkraft auf den Zugstab 4 übertragen, der sich mitsamt dem Trägerstab 9 relativ zu dem Adapterkopf sowie den daran befestigten Klemmelementen 7 bewegt. Durch den ansteigenden Durchmesser des Aufweitkörpers 6 (und die schrägen Kontaktflächen der Klemmelemente 7) werden die Klemmelemente 7 radial ausgelenkt, wodurch diese gegen die Innenwand des Rohrs 3 gedrückt werden und eine Übertragung von längsgerichteten Zugkräften ermöglicht wird. Zähne 24 an den Klemmelementen 7 erhöhen die übertragbaren Kräfte durch einen formschlüssigen Anteil der Abstützung. Dadurch, daß die Trägerhülse 10 mit einer Spielpassung auf dem Trägerstab 9 angeordnet ist, wird die Axialbewegung des mit dem Zugstab 4 verbundenen Trägerstabs 9 nicht auf die Trägerhülse 10 übertragen. Dadurch wird eine Axialbewegung der Dichtscheiben oder von (in der Nähe der Achse angeordneten) Teilen der Dichtscheiben 12, 13 vermieden.

## Patentansprüche

1. Vorrichtung zum Abdichten eines Rohrs mit einem Trägerelement sowie mindestens einem Dichtelement, das lösbar mit dem Trägerelement verbunden ist, wobei das Dichtelement zumindest einen Randbereich aus einem elastischen Werkstoff aufweist und die Abmessungen des Dichtelements so gewählt sind, daß eine Dichtwirkung durch eine elastische Deformation des Randbereichs des Dichtelements erfolgt.

2. Vorrichtung gemäß Anspruch 1, **dadurch gekennzeichnet, daß** das Dichtelement als Dichtscheibe (12; 13) ausgeführt ist.

3. Vorrichtung gemäß Anspruch 2, **dadurch gekennzeichnet, daß** die Dichtscheibe (12; 13) eine Zwischenscheibe (14; 15) aus einem elastischen Material und an zumindest einer Seite eine Stützscheibe (16, 18; 17, 19) aus einem steifen Material aufweist.

4. Vorrichtung gemäß Anspruch 2 oder 3, **dadurch gekennzeichnet, daß** die Zwischenscheibe (14; 15) zwischen zwei Stützscheiben (16, 18; 17, 19) eingeklemmt ist.

5. Vorrichtung gemäß Anspruch 2 oder 3, **dadurch gekennzeichnet, daß** mindestens eine Stützscheibe (16, 18; 17, 19) ein Halteprofil (16a) aufweist.

6. Vorrichtung gemäß einem der vorhergehenden Ansprüche, **dadurch gekennzeichnet, daß** das mindestens eine Dichtelement eine zentrale Öffnung aufweist, die zu dem Querschnitt des Trägerelements korrespondiert.

7. Vorrichtung gemäß einem der vorhergehenden Ansprüche, **dadurch gekennzeichnet, daß** das Trägerelement als Trägerstab (9) oder als Trägerstab (9) mit einer auf dem Trägerstab (9) angeordneten, das mindestens eine Dichtelement tragenden Trägerhülse (10) ausgebildet ist.

8. Vorrichtung gemäß einem der vorhergehenden Ansprüche, **dadurch gekennzeichnet, daß** das Trägerelement mit einem runden Querschnitt ausgebildet ist und eine Befestigung des Dichtelements mit dem Trägerelement mittels eines Gewindes erfolgt.

9. Vorrichtung gemäß einem der vorhergehenden Ansprüche, **dadurch gekennzeichnet, daß** das Trägerelement einen ersten Anschlag aufweist, an dem das Dichtelement im montierten Zustand anliegt.

10. Vorrichtung gemäß Anspruch 9, **gekennzeichnet durch** ein lösbar mit dem Trägerelement verbundenes Halteelement (20), das einen zweiten Anschlag für das Dichtelement bildet, der bezogen auf das Dichtelement auf der gegenüberliegenden Seite von dem ersten Anschlag angeordnet ist.

11. Vorrichtung gemäß einem der vorhergehenden Ansprüche, **dadurch gekennzeichnet, daß** zwischen dem Trägerelement und dem/den Dichtelement(en) eine Dichtung angeordnet ist.

12. Vorrichtung gemäß einem der vorhergehenden Ansprüche, **gekennzeichnet durch** mindestens zwei Dichtelemente, wobei zwei benachbarte Dichtelemente über ein Distanzstück (21) in einem Abstand zueinander gehalten werden.

13. Vorrichtung gemäß einem der vorhergehenden Ansprüche, **gekennzeichnet durch** ein Adapterelement zum Verbinden mit einem externen Bauteil.

14. Vorrichtung gemäß Anspruch 13, **gekennzeichnet durch** ein Gewinde und/oder eine Steckverbindung.

15. System aus einer Klemmvorrichtung (1) zur Fixierung an einem Rohr (3) sowie einer Dichtvorrichtung (2) gemäß einem der Ansprüche 1 bis 14.

16. System gemäß Anspruch 15, **dadurch gekennzeichnet, daß** die Klemmvorrichtung (1) einen - vorzugsweise konischen - Adapterkopf (5) aufweist, der sich in längsaxialer Richtung an dem Rohr (3) abstützt.

17. System gemäß Anspruch 16, **dadurch gekennzeichnet, daß** der Adapterkopf (5) eine Öffnung aufweist, in der ein Zugelement in längsaxialer Richtung verschiebbar gelagert ist.

18. System gemäß Anspruch 17, **gekennzeichnet durch** ein mit dem Zugelement verbundenen Aufweitkörper (6), der vorzugsweise zumindest teilweise konisch ausgebildet ist.

19. System gemäß Anspruch 18, **gekennzeichnet durch** mindestens ein, vorzugsweise mehrere an dem Adapterkopf (5) befestigte Klemmelemente (7), die so ausgebildet und angeordnet sind, daß sie entgegen einer Rückstellkraft **durch** eine Relativbewegung des Aufweitkörpers (6) hierzu radial ausgelenkt werden.

20. System gemäß Anspruch 19, **dadurch gekennzeichnet, daß** eine radiale Auslenkung der Klemmelemente (7) durch eine Relativbewegung erfolgt, die aus einer auf das Zugelement aufgebrachten Zugkraft resultiert.

21. System gemäß einem der Ansprüche 15 bis 20, **dadurch gekennzeichnet, daß** die Dichtvorrichtung (2) über ein Gewinde und/oder eine Steckverbindung mit der Klemmvorrichtung (1) verbunden ist.

22. System gemäß einem der Ansprüche 16 bis 20, **dadurch gekennzeichnet, daß** die Dichtvorrichtung (2) mit dem Zugelement verbunden ist.
